Europäisches Patentamt

European Patent Office

Office européen des brevets

(19)

(11) EP 0 664 936 B1

(12) **EUROPÄISCHE PATENTSCHRIFT**

(45) Veröffentlichungstag und Bekanntmachung des Hinweises auf die Patenterteilung:
**29.05.1996 Patentblatt 1996/22**

(51) Int Cl.6: **H02M 3/337**

(86) Internationale Anmeldenummer:
**PCT/DE93/00931**

(21) Anmeldenummer: 93921787.3

(22) Anmeldetag: **04.10.1993**

(87) Internationale Veröffentlichungsnummer:
**WO 94/09557 (28.04.1994 Gazette 1994/10)**

(54) **EINRICHTUNG MIT EINEM GLEICHSPANNUNGSWANDLER FÜR DEN SCHALTBETRIEB**

ARRANGEMENT WITH A D.C.-D.C. CONVERTER FOR SWITCHING OPERATION

AGENCEMENT DE COMMUTATION A CONVERTISSEUR CONTINU-CONTINU

(84) Benannte Vertragsstaaten:
**DE FR GB IT NL**

(30) Priorität: **15.10.1992 DE 4234771**

(43) Veröffentlichungstag der Anmeldung:
**02.08.1995 Patentblatt 1995/31**

(73) Patentinhaber: **ROBERT BOSCH GMBH**
**70442 Stuttgart (DE)**

(72) Erfinder:
- **OHMS, Franz**
  **D-74420 Oberrot (DE)**
- **GEILER, Martin**
  **D-79215 Elzach-Brechtal (DE)**

(56) Entgegenhaltungen:
**EP-A- 0 219 735          EP-A- 0 407 691**
**WO-A-91/16756          DE-A- 3 543 300**
**GB-A- 2 095 943**

**Beschreibung**

Einrichtung mit einem Gleichspannungswandler für den Schaltbetrieb

Die Erfindung geht aus von eine Einrichtung gemäß dem Oberbegriff des Anspruchs 1. Eine solche Einrichtung ist aus der EP 0 407 691 A1 bzw. aus der US 5,095,416 bekannt.

Bei der Einrichtung gemäß EP 0 407 691 A1 kann der Eingangsstrom (Energieaufnahmestrom) des Spannungswandlers insbesondere während einer Anlaufphase, in der kapazitive Elemente zu laden sind, begrenzt werden. Hierzu wird der Eingangsstrom des als Gegentaktgleichspannungswandler ausgebildeten Spannungswandlers in den beiden Gegentaktzweigen pro Schaltzyklus gemessen und aufintegriert. Aus dem aufintegrierten Signal wird ein Steuersignal für einen Pulsfrequenzmodulator abgeleitet, der die Einschaltzeiten der Gegentaktschalter des Spannungswandlers bestimmt. In Abhängigkeit des erfaßten Eingangsstromes werden somit die Einschaltzeiten der Gegentaktschalter nachgeregelt und zwar so, daß der arithmetische Mittelwert des Gegentaktwandlerstromes konstant bleibt.

Aus der DE 35 43 300 A1 ist ein Schaltregler bekannt, der während einer Anlaufphase mit Impulsen ansteigender Breite gesteuert wird. Im stationären Betrieb erfolgt eine Pulsbreitensteuerung in Abhängigkeit der Höhe der Schaltregler-Ausgangsspannung. Beim Betriebsartenübergang, der sich danach richtet, ob die Ausgangsspannung eine bestimmte Höhe erreicht.hat, wird die Synchronität des für die jeweilige Impulsaufbereitung zuständigen Oszillators über ein Steuersignal vom sekundärseitigen Fehlersignalverstärker aus hergestellt.

Bei einem Schaltnetzteil für einen Fernsehempfänger gemäß WO 92/01355 wird während des Startup-Betriebs die Frequenz der den Schalttransistor steuernden Impulse bei steigender Einschaltzeit und gleichbleibender Ausschaltzeit kontinuierlich verringert (Pulsfrequenzsteuerung). Zu Beginn des stationären Betriebs erfolgt eine Synchronisierung auf die Zeilenfrequenz des Fernsehempfängers und eine Pulsbreitenregelung in Abhängigkeit einer Betriebsspannung.

Wenn nach einer Anlaufphase oder einem sonstigen nicht regulären Betriebszustand des Spannungswandlers der Normalbetrieb, z.B. Betrieb der Schaltglieder des Gegentaktwandlers mit konstanten Einschaltpulsen, aufgenommen werden soll, kann es zu Störungen oder Übergangsproblemen kommen.

Aufgabe der Erfindung ist es die Einrichtung ausgehend vom Oberbegriff des Patentanspruchs 1 so auszubilden, daß ein sicherer und problemloser Übergang des Spannungswandlers von einem in einen anderen Betriebszustand, insbesondere in den Normalbetriebszustand, möglich ist. Diese Aufgabe wird durch die Maßnahmen des Anspruchs 1 gelöst. Die weiteren Ansprüche zeigen vorteilhafte Ausgestaltungen auf.

Die Erfindung beruht auf der Erkenntnis, daß insbesondere während der Anlaufphase des Spannungswandlers, wenn kapazitive Elemente geladen werden müssen, ein höherer Strom fließen kann als im Normalbetrieb. Wenn nun in einer solchen Anlaufphase der Strom über die Länge der Einschaltimpulse der Schaltglieder des Spannungswandlers geregelt oder gesteuert wird, ist die Schaltfrequenz höher als im Normalbetrieb. Um nun auf diese tiefere Schaltfrequenz bei Normalbetrieb umschalten zu können, wird erfindungsgemäß ein Phasenvergleich der Schaltfrequenz im sogenannten Strombegrenzungsmode mit einer konstanten Schaltfrequenz, insbesondere die Taktfrequenz eines vorgeschalteten im Schaltreglerbetrieb arbeitenden Vorreglers, vorgenommen. Liegen beide Schaltsignale in einem vorgegebenen Phasentoleranzbereich, so kann problemlos die Umschaltung auf die insbesondere konstante Schaltfrequenz des Normalbetriebs erfolgen. Durch diese Maßnahme kann auf einfache Weise Synchronität zwischen einem vorgesehenen Vorregler und dem Spannungswandler hergestellt werden.

Anhand der Zeichnungen werden nun Ausführungsbeispiele der Erfindung näher erläutert. Es zeigen

Fig. 1 ein Prinzipschaltbild einer Einrichtung nach der Erfindung,
Fig. 2 die Ansteuerimpulse für die Schaltglieder des Spannungswandlers,
Fig. 3 Signale für den Phasenvergleich,
Fig. 4 drei verschiedene Betriebsabschnitte,
Fig. 5 ein Ersatzschaltbild für den Gegentaktgleichspannungswandler,
Fig. 6 den Spannungswandlerstrom für eine erste Teilphase,
Fig. 7 den Spannungswandlerstrom für eine weitere Teilphase und
Fig. 8 eine alternative Ausführungsform der Steuerung des Spannungswandlers.

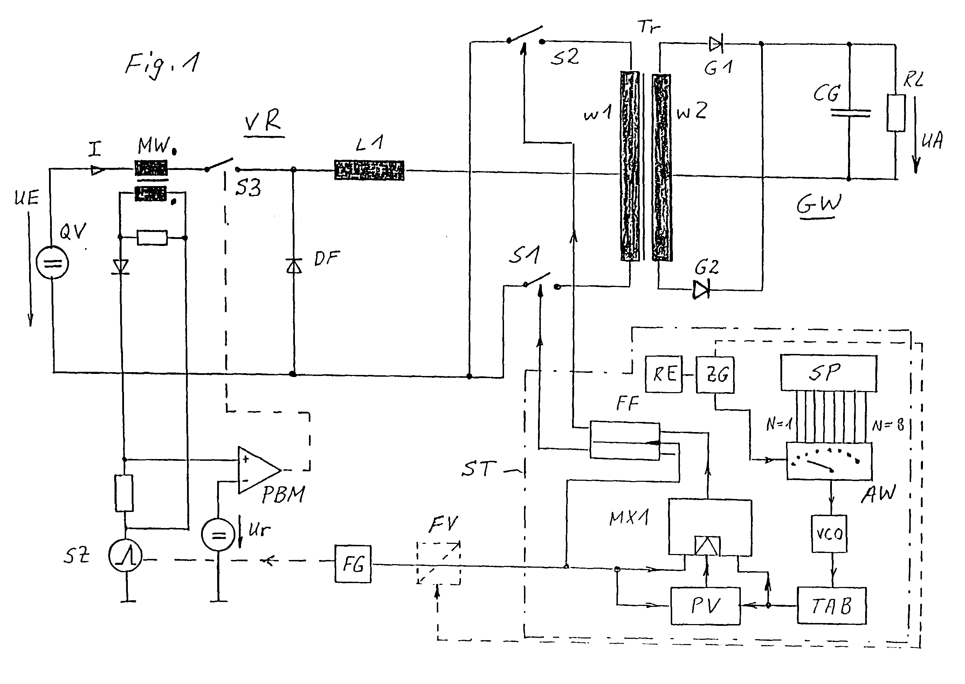

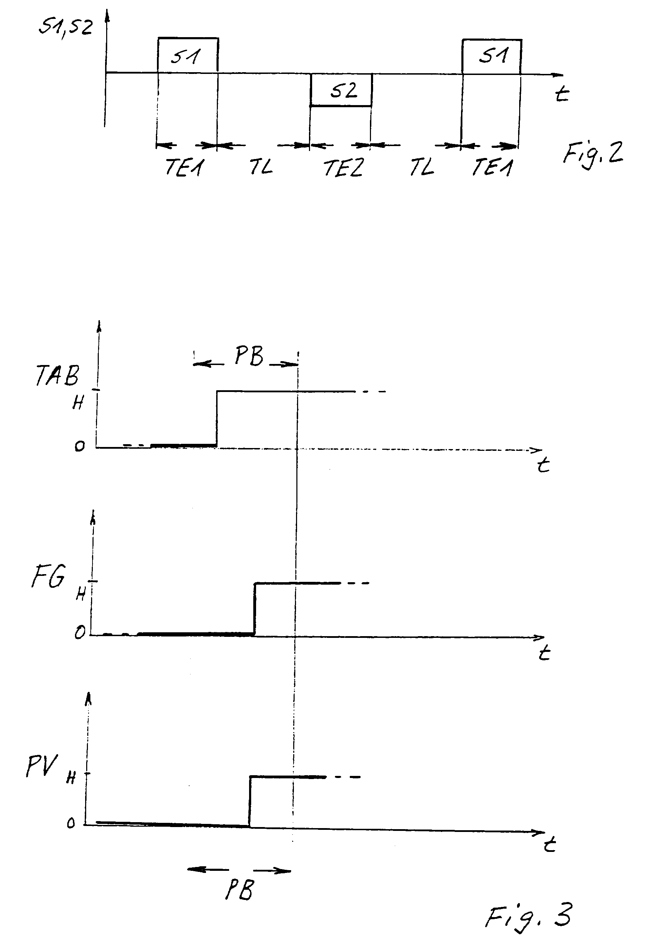

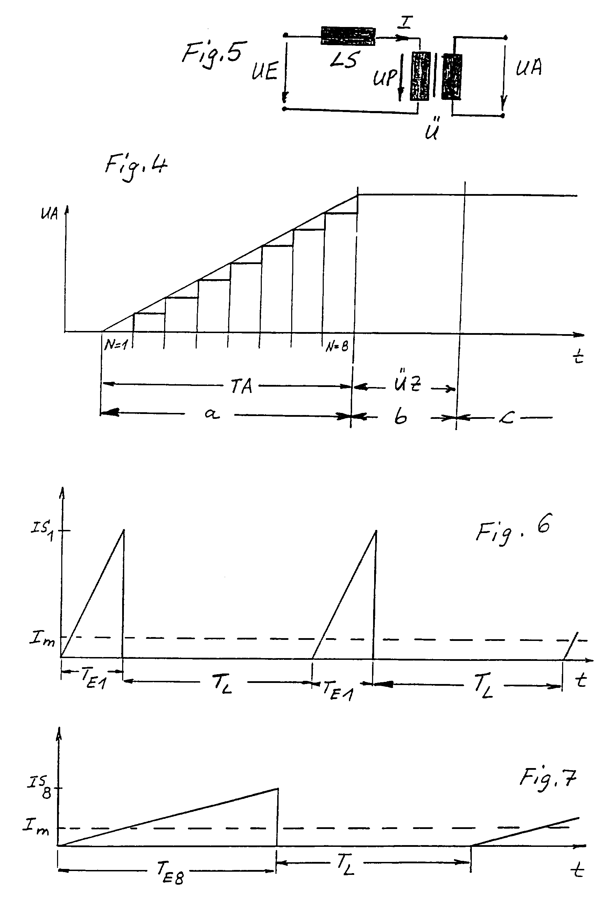

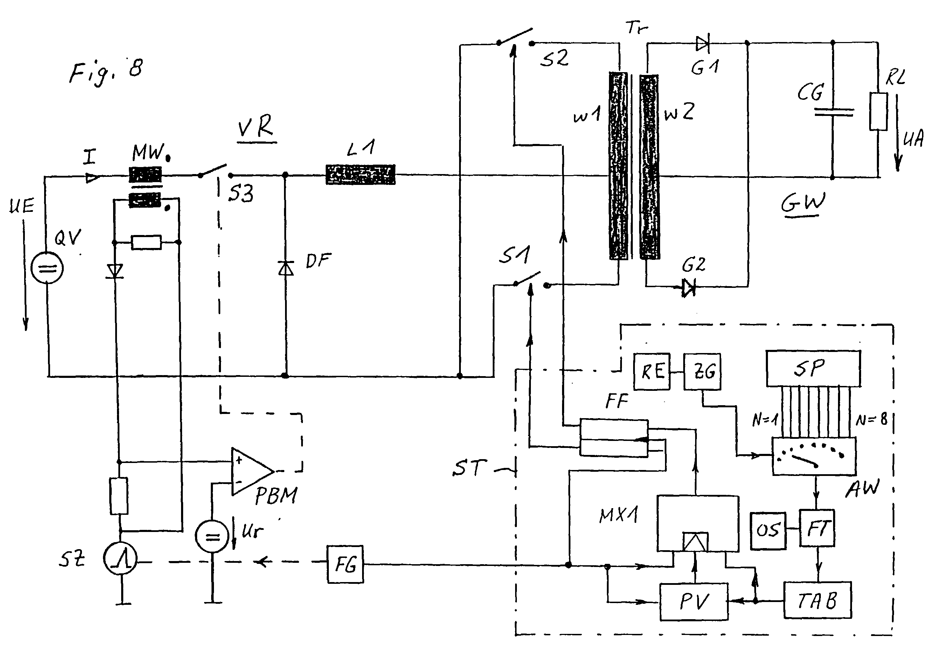

Der Spannungswandler GW nach Fig 1 ist beispielsweise als Gegentaktgleichspannungswandler aufgebaut mit den Gegentaktschaltern S1 und S2, die auf die Primärwicklung w1 (Verbindung jeweils mit den Wicklungsenden) des Transformators Tr arbeiten. Die Sekundärwicklung w2 arbeitet zusammen mit den Gleichrichtern G1 und G2 als Zweigweg-Gleichrichterschaltung mit dem Glättungskondensator CG und der Last RL. Die Mittelanzapfung der Primärwicklung wl des Transformators Tr ist über einen Vorregler VR - hier beispielsweise als Buckregler aufgebaut mit dem Schaltglied S3, der Induktivität L1 und der Freilaufdiode DF - an eine Versorgungsspannungsquelle (QV) angeschlossen. Über die Steuereinrichtung ST ist der Spannungswandler GW so betreibbar, daß die Schaltfrequenz für die Gegentaktschalter S1 und S2 insbesondere in der Anlaufphase in Abhängigkeit des Energieaufnahmestromes variiert und zwar so, daß der Energieaufnahmestrom nahezu konstant ist und einen vorgegebenen Grenzwert nicht übersteigt. Dieses Verhalten läßt sich durch eine übliche Stromregelung oder, besonders vorteilhaft, durch eine Steuerung erreichen. Während einer Anlaufphase des Gegentaktspannungswandlers GW gilt für die Schaltfrequenz:

$$fs = \frac{1}{2 \cdot T_{E1,2} + 2\, T_L}$$

wobei $T_{E1,2}$ die Einschaltzeiten der Gegentaktschalter S1 und S2 sind und $T_L$ die Lückzeit, d.h. die stromlose Zeit zwischen zwei Gegentaktimpulsen, darstellt (Fig. 2). Da in dieser Anlaufphase der Spannungswandler im Strombegrenzermode arbeitet, ist diese Schaltfrequenz fs höher als die Schaltfrequenz z.B. 45 kHz des Vorreglers VR, die durch den Taktgeber FG vorgegeben wird. Arbeitet der Vorregler VR, wie in Fig. 1 dargestellt, mit Pulsbreitenmodulation - Steuerung des Schalters S3 über einen Pulsbreitenmodulator PBM, der den Energieaufnahmestrom I über einen Meßwandler MW auswertet zusammen mit einem Sägezahlsignal SZ, dessen Wiederholfrequenz vom Taktgeber FG bestimmt wird, und einer Referenzspannung Ur - ist der Taktgeber FG ein Festtaktgeber. Um die Schaltsignale des Spannungswandlers GW mit denen des Vorreglers VR zu synchronisieren ist eine Phasenvergleichsstufe PV vorgesehen, die bei Übereinstimmung des Ausgangssignals des Festtaktgebers FG (Schaltfrequenz für den Vorregler VR) mit dem Schaltsignal für den Spannungswandler (Schaltfrequenz fs) innerhalb des vorgegebenen Phasentoleranzbereiches PB (Fig. 3) eine Umschaltung des Spannungswandlers GW auf einen Schaltbetrieb mit konstanter Frequenz - hier vorteilhafterweise die vom Festtaktgeber FG abgegebene Frequenz umschaltet. Die Schaltfrequenz des Spannungswandlers während des Strombegrenzermodes wird über eine Taktaufbereitungsstufe TAB abgeleitet, deren Ausgangssignal in der ersten Zeile von Fig. 3 dargestellt ist; in der zweiten Zeile ist das Ausgangssignal des Festtaktgebers FG und in der dritten Zeile das Ausgangssignal der Phasenvergleichsstufe PV dargestellt. Wenn die beiden Signale von Taktaufbereitungsstufe TAB und Festtaktgeber FG im Phasentoleranzbereich PB von z.B. 0 bis 3 μsec bezüglich ihrer Anstiegsflanken liegen, erscheint am Ausgang der Phasenvergleichsstufe PV ein Schaltsignal H, welches einen Multiplexer MX1 steuert und anstelle des Ausgangssignals der Taktaufbereitungsstufe TAB das Ausgangssignal des Festtaktgeber FG für die Aufbereitung der Gegentaktimpulse der Schalter S1 und S2 über das Flip-Flop FF bereitstellt. Ist der Spannungswandler GW als Eintaktwandler aufgebaut kann auf das Flip-Flop FF natürlich verzichtet werden. Bei Ausbildung des Spannungswandlers als Brückenwandler muß natürlich eine entsprechende Aufbereitung der Ansteuerimpulse erfolgen. Die Lückzeit $T_L$ wird fest vorgegeben, z.B. gemäß EP 77 958 B1. Die Bildung der Lückzeit kann bereits in die Taktaufbereitungsstufe TAB erfolgen oder nach dem Multiplexer MX1. Diese Variante hat den Vorteil, daß der Festtaktgeber FG keine besonderen Einrichtungen zur Bildung der Lückzeit aufweisen muß.

Fig. 4 zeigt drei verschiedene Abschnitte für den Betrieb des Spannungswandlers. Im Abschnitt a - Einschaltmode - steigt die Ausgangsspannung UA des Spannungswandlers unter der Wirkung der spannungswandlereigenen Induktivität und/oder einer Beschaltungsinduktivität rampenhaft an (bei konstantem Energieaufnahmestrom). Die Induktivität ist bei einem Gegentaktgleichspannungswandler im wesentlichen durch die Streuinduktivität LS seines Transformators Tr gegeben. Für das Ersatzschaltbild (Fig. 5) gelten folgende Beziehungen:

$$UA/UP = \ddot{U}$$

und

$$UP = LS \cdot \frac{dI}{dt} \, .$$

Die kapazitiven Beschaltungselemente des Gleichspannungswandlers sind hier symbolisch im Glättungskondensator CG zusammengefaßt. Die Streuinduktivität LS wird hier zur Begrenzung des Stromanstiegs dI/dt benutzt. Die Stromanstiegszeit TA (Fig. 4), d.h. die Zeitphase während der die Ausgangsspannung UA des Spannungswandlers infolge der Wirkung der Streuinduktivität LS linear ansteigt, wird nun in z.B. N = 8 gleiche Teilphasen - Zeitintervalle - unterteilt. Die Rampenspannung beim Anstieg wird nun durch eine Treppenfunktion mit N = 8 Stufen angenähert. Mit dieser Annäherung und der Streuinduktivität LS als wirksamer Induktivität können nun die einzelnen Einschaltzeiten innerhalb der entsprechenden 8 Zeitintervalle so gewählt werden, daß der arithmetische Mittelwert des Stromes I nahezu konstant bleibt und damit der Einschaltstrom nicht höher wird als ein vorgegebener Nennstrom. Im ersten der 8 Zeitintervalle fällt die gesamte treibende Spannung an der Streuinduktivität LS ab.

Für den Spitzenwert IS des Stromes I gilt:

$$IS = \frac{UP}{LS} \cdot T_{E1} \, ,$$

wobei $T_{E1}$ die Einschaltzeit des Spannungswandlers in der ersten der n-Teilphasen ist.

Der arithmetische Mittelwert $I_m$ des Stromes I pro Schaltzyklus ergibt sich zu:

$$Im = \frac{(IS/2) \cdot T_{E1}}{T_{E1} + T_L} \, ,$$

Mit der Beziehung für IP ergibt sich dann:

$$T_{E1} = \frac{I_m}{UP} \cdot LS \left( 1 + \sqrt{1 + \frac{2 \, T_L \cdot UP}{I_m \cdot LS}} \right)$$

Mit den Werten $I_m = 6A$, $UP = 50V$, $LS = 1\mu H$, $T_L = 3\mu s$ ergibt sich $T_{E1} = 0,97 \, \mu s$.

In Fig. 6 ist der Gleichspannungswandlerstrom I für diese erste Teilphase dargestellt.

In der zweiten Teilphase fällt nur noch 7/8 der treibenden Spannung an der Streuinduktivität ab. Für die dritte Teilphase entsprechend 6/8 usw.

Für die n-te Teilphase, n = 1,2,3,...N, gilt:

$$T_{En} = \frac{I_m \cdot LS}{UP \left( \dfrac{N-n+1}{N} \right)} \left( 1 + \sqrt{1 + \frac{2 \, T_L \cdot UP}{I_m \cdot LS} \cdot \frac{N-n+1}{N}} \right)$$

mit $T_{En}$ = Einschaltzeit des Spannungswandlers in der n-ten Teilphase,

N = Anzahl der Teilphasen, z.B. N = 8.

Für n gilt: $n \in \mathbb{N}$ und $n \le N$.

Beispielsweise erhält man mit obigen Werten $T_{E8} = 3,5 \, \mu s$. In Fig. 7 ist der Stromverlauf für diese Teilphase N = 8 dargestellt.

Die Zeitdauer der Rampe, d.h. die Zeitphase während der die Ausgangsspannung des Spannungswandlers infolge der Induktivität (hier die Streuinduktivität des Transformators) zunimmt, ist abhängig von den ausgangsseitigen kapazitiven Beschaltungselementen, einem eventuelle kapazitiven Anteil der Last, sowie von dem arithmetischen Mittelwert des Stromes, der zulässig sein soll. Für die Anstiegszeit TA (Fig. 4 im Abschnitt a) gilt demnach

$$TA \sim \frac{CG \cdot UA}{I_m} \, ,$$

wobei in CG alle ausgangsseitigen kapazitiven Anteile vereinigt sein sollen. Die Zahl N der zu wählenden Zeitintervalle (Teilphasen) ist davon abhängig wie genau die Annäherung der Treppenfunktion an die Rampe (Fig. 4) sein soll. Für eine typische Hochspannungsstromversorgung eines Wanderfeldröhrenverstärkers sind N = 8 Zeitintervalle ausreichend. Mit TA ≃ 8ms und N = 8 ergibt sich eine Intervallzeit einer Teilphase zu 1 ms.

Die Signalaufbereitung in der Taktaufbereitungsstufe TAB kann in volldigitaler Realisierung aus einer Verknüpfungslogik bestehen, die aus einem Takt von beispielsweise 5 MHz die entsprechenden Verknüpfungen während der Anstiegszeit TA, die zuvor z.B. in einem Testbetrieb ermittelt wird, vornimmt. Jede Millisekunde wird, beispielsweise gesteuert über einen Taktzähler, die Einschaltzeit $T_{En}$ auf einen wie zuvor berechneten höheren Wert eingestellt.

Wie Fig. 1 zeigt, können die Kennwerte für die z.B. N = 8 verschiedenen Einschaltzeiten für die unterschiedlichen Teilphasen in einem Speicher SP zuvor abgelegt werden und über eine Auswahlschaltung AW an den frequenzbestimmenden Eingang eines frequenzsteuerbaren Oszillators VCO weitergeleitet werden. Die Auswahlschaltung AW ist von einem Zeitgeber ZG gesteuert, der nach jeweils einer Millisekunde einen der 8 Kennwerte an den Oszillator VCO weiterschaltet und so die zuvor abgeleiteten Einschaltzeiten für die Schalter S1 und S2 bestimmt. Zur Aufbereitung der Gegentaktimpulse ist dem Oszillator VCO ein Flip-Flop FF nachgeschaltet. Am Ende eines Anstiegs der Ausgangsspannung UA (Fig. 4) wird der Zeitgeber ZG über eine Rücksetzeinrichtung RE und damit auch die Auswahlschaltung AW zurückgesetzt, um für einen erneuten Anstieg der Ausgangsspannung UA wiederum verschiedene Einschaltzeiten $T_{En}$ bereitzustellen.

Alternativ zur Realisierung gemäß Fig. 1 kann der Oszillator auch als Festfrequenzoszillator OS aufgebaut sein (Fig. 8) mit einem nachgeschalteten Frequenzteiler FT, dessen Teilerverhältnis einstellbar ist. Über die Auswahlschaltung AW wird dann für jeden Kennwert ein anderes Teilerverhältnis eingestellt.

Der Abschnitt b in Fig. 4 stellt den sogenannten "Tracking-Mode" dar, in welchem, wie zuvor beschrieben, der Phasenvergleich und die Umschaltung auf die Schaltfrequenz bei Normalbetrieb vorgenommen wird. Insgesamt ist hierfür die Übergangszeit ÜZ vorgesehen. Alternativ zur Umschaltung mittels Multiplexer MX1 kann auch der frequenzsteuerbare Oszillator VCO über das Ausgangssignal der Phasenvergleichsstufe PV in seiner Phasenlage beispielsweise über eine PLL nachgeführt werden.

Der Abschnitt c in Fig. 4 steht für den Normalbetriebsfall.

Damit bei einem Übergang von der hohen variierenden Schaltfrequenz auf die niedrige feste Schaltfrequenz des Normalmodes der Induktionshub des Gleichspannungswandlers GW nicht schlagartig ansteigt, sind Mittel FV zur Begrenzung des Induktionshubes im Übergangsbereich vorgesehen. Im einfachsten Fall können diese Mittel FV ( in Fig. 1 gestrichelt eingezeichnet) aus einer Frequenzvervielfacher- bzw. einer Frequenzteilerstufe bestehen. Beim Ausführungsbeispiel gemäß Fig. 1 genügt es die Ausgangsfrequenz des Taktgebers FG für eine Übergangzeit von z.B. 2 ms zu verdoppeln bevor auf die niedrige Betriebsfrequenz (Frequenz des Taktgebers FG) umgeschaltet wird. Dieser Frequenzverdoppler FV wird vorzugsweiser in seiner Einschaltzeit ebenfalls vom Zeitgeber ZG gesteuert.

**Patentansprüche**

1. Einrichtung bestehend aus einem Spannungswandler (GW) für den Schaltbetrieb, welcher über einen als Schaltregler ausgebildeten Vorregler (VR) an eine Versorgungsspannungsquelle (QV) angeschlossen ist, wobei der Spannungswandler über eine Steuereinrichtung (ST) so betreibbar ist, daß die Schaltfrequenz in Abhängigkeit des Energieaufnahmestroms des Spannungswandlers (GW) variiert, wobei eine Steuerung der Einschaltpulse vorgesehen ist, die eine Strombegrenzung bewirkt, dadurch gekennzeichnet, daß eine Phasenvergleichsstufe (PV) vorgesehen ist, über die bei Übereinstimmung eines Schaltsignals eines Taktgebers (FG) mit einem Schaltsignal des Spannungswandlers (GW) innerhalb eines vorgegebenen Phasentoleranzbereichs (PB) eine Umschaltung des Spannungswandlers (GW) auf einen Schaltbetrieb mit konstanter Schaltfrequenz erfolgt.

2. Einrichtung nach Anspruch 1, dadurch gekennzeichnet, daß eine Taktaufbereitungsstufe (TAB) vorgesehen ist, die gesteuert über einen Zeitgeber (ZG) für jedes Zeitintervall des Zeitgebers (ZG) Einschaltpulse anderer Länge für den Gleichspannungswandler (GW) liefert.

3. Einrichtung nach Anspruch 2, dadurch gekennzeichnet, daß die Taktaufbereitungsstufe (TAB) sowie ein Festtaktgeber (FG) an die Vergleichseingänge der Phasenvergleichsstufe (PV) angeschlossen sind und daß ein Multiplexer (MX1) vorgesehen ist, der vom Ausgang der Phasenvergleichsstufe (PV) steuerbar ist und der bei Phasenübereinstimmung den Festtaktgeber (FG) mit dem Schaltglied (S1, S2) des Gleichspannungswandlers (GW) verbindet.

4. Einrichtung nach Anspruch 2 oder 3, dadurch gekennzeichnet, daß die Länge der Einschaltpulse für ein entsprechendes Zeitintervall derart gewählt ist, daß der Mittelwert des Engergieaufnahmestroms des Spannungswandlers (GW) für das entsprechende Zeitintervall einen vorgegebenen Grenzwert nicht übersteigt.

5. Einrichtung nach Anspruch 3 oder 4, dadurch gekennzeichnet, daß der Festtaktgeber (FG) als Taktgeber für den Vorregler (VR) dient, der als Buchregler, Boostregler oder als Mischform aus beiden Reglertypen aufgebaut ist.

6. Einrichtung nach einem der Ansprüche 1 bis 5, dadurch gekennzeichnet, daß der Spannungswandler (GW) als Gleichspannungs-Gegentaktwandler ausgebildet ist.

7. Einrichtung nach einem der Ansprüche 1 bis 6, gekennzeichnet durch Mittel (VCO) zur Nachführung der variierenden Schaltfrequenz auf die konstante Schaltfrequenz innerhalb einer vorgegebenen Übergangszeit (ÜZ).

8. Einrichtung nach einem der Ansprüche 1 bis 7, gekennzeichnet durch Mittel (FV) zur Begrenzung des Induktionshubes des Spannungswandlers (GW) während des Übergangs von der variierenden Schaltfrequenz zur konstanten Schaltfrequenz.

9. Einrichtung nach Anspruch 8, gekennzeichnet durch die Ausbildung der Mittel (FV) zur Begrenzung des Induktionshubes als Frequenzteiler - bzw. Frequenzvervielfacherstufe (FV) für die verwendeten Schaltfrequenzen des Spannungswandlers (GW).

**Claims**

1. Device comprising a voltage transformer (GW) for switching operation, which is connected to a supply voltage source (QV) via a pre-regulator (VR) designed as a switching controller, it being possible to operate the voltage transformer via a control device (ST) in such a way that the switching rate varies as a function of the input current of the voltage transformer (GW), control of the switching-on pulse which effects current limitation being provided, characterized in that a phase comparator stage (PV) is provided via which the voltage transformer (GW) is switched over to switching operation with a constant switching rate in the event of correspondence between a switching signal of a clock generator (FG) and a switching signal of the voltage transformer (GW) within a prescribed phase tolerance range (PB).

2. Device according to Claim 1, characterized in that a clock pulse conditioning stage (TAB) is provided which, controlled via a time generator (ZG), delivers for each time interval of the time generator (ZG) switching-on pulses of different length for the DC-DC converter (GW).

3. Device according to Claim 2, characterized in that the clock pulse conditioning stage (TAB) and a fixed clock generator (FG) are connected to the compare inputs of the phase comparator stage (PV), and in that a multiplexer (MX1) is provided which can be controlled by the output of the phase comparator stage (PV) and which in the event of phase correspondence connects the fixed clock generator (FG) to the switching element (S1, S2) of the DC-DC converter (GW).

4. Device according to Claim 2 or 3, characterized in that the length of the switching-on pulses is selected for a corresponding time interval in such a way that the mean value of the input current of the voltage transformer (GW) does not exceed a prescribed limiting value for the corresponding time interval.

5. Device according to Claim 3 or 4, characterized in that the fixed clock generator (FG) serves as clock generator for the pre-regulator (VR), which is constructed as a book regulator or boost regulator or as a mixed form of both types of regulator.

6. Device according to one of Claims 1 to 5, characterized in that the voltage transformer (GW) is designed as a DC-DC push-pull converter.

7. Device according to one of Claims 1 to 6, characterized by means (VCO) for correcting the varying switching rate to the constant switching rate within a prescribed transition time (ÜZ).

8. Device according to one of Claims 1 to 7, characterized by means (FV) for limiting the induction excursion of the voltage transformer (GW) during the transition from the varying switching rate to the constant switching rate.

9. Device according to Claim 8, characterized by the design of the means (FV) for limiting the induction excursion as a frequency divider stage or frequency multiplier stage (FV) for the switching rates of the voltage transformer (GW) which are used.

**Revendications**

1. Installation composée d'un convertisseur de tension (GW) pour le mode de commutation, relié par un régulateur intermédiaire (VR) en forme de régulateur à découpage à une source de tension d'alimentation (QV), le convertisseur de tension étant commandé par une installation de commande (ST) pour que la fréquence de commutation varie en fonction du flux d'énergie reçu par le convertisseur de tension (GW), la commande des impulsions de commutation étant prévue pour assurer une limitation de courant, caractérisée par un étage comparateur de phases (PV) qui, en cas de concordance entre un signal de commutation d'une horloge (générateur de fréquence) (FG) et un signal de commutation du convertisseur de tension (GW) à l'intérieur d'une plage de tolérance de phases, prédéterminée (PB), produit une commutation du commutateur de tension (GW) sur un mode de commutation à fréquence de commutation constante.

2. Installation selon la revendication 1, caractérisée par un étage de préparation de cadence (TAB) qui fournit de manière commutée par l'intermédiaire d'une horloge (ZG), pour chaque intervalle de temps de l'horloge (ZG), des impulsions de commutation de longueurs différentes pour le convertisseur de tension (GW).

3. Installation selon la revendication 2, caractérisée en ce que l'étage de préparation de cadence (TAB) ainsi qu'un générateur de cadence fixe (FG) sont reliés aux entrées de comparaison de l'étage de comparaison de phases (PV) et il est prévu un multiplexeur (MX1), commandé par la sortie de l'étage de comparaison de phases (PV) et qui, en cas de concordance des phases, relie le générateur de cadence fixe (FG) à un organe de commutation (S1, S2) du convertisseur de tension continue (GW).

4. Installation selon la revendication 2 ou 3, caractérisée en ce que la longueur des impulsions de commutation est choisie pour un intervalle de temps correspondant pour que la valeur moyenne du flux d'énergie reçue par le convertisseur de tension (GW) pour l'intervalle de temps correspondant ne dépasse pas une valeur limite prédéterminée.

5. Installation selon la revendication 3 ou 4, caractérisée en ce que le générateur de cadence fixe (FG) sert de générateur de cadence du régulateur intermédiaire (VR) construit comme un régulateur de compensation, un régulateur élévateur de tension ou un mélange des deux types de régulateur.

6. Installation selon l'une des revendications 1 à 5, caractérisée en ce que le convertisseur de tension (GW) est un convertisseur de tension, symétrique.

7. Installation selon l'une des revendications 1 à 6, caractérisée par des moyens (VCO) pour asservir la fréquence de commutation variable sur une fréquence de commutation constante à l'intérieur d'une période transitoire prédéterminée (ÜZ).

8. Installation selon l'une des revendications 1 à 7, caractérisée par des moyens (FV) pour limiter la course inductive du convertisseur de tension (GW) pendant la transition de la fréquence de commutation variable à la fréquence de commutation constante.

9. Installation selon la revendication 8, caractérisée par la réalisation des moyens (FV) pour limiter la course inductive comme étage diviseur de fréquence ou étage multiplicateur de fréquence (FV) pour les fréquences de commutation utilisées par le convertisseur de tension (GW).

Fig.1

Fig. 2

Fig. 3

Fig.5

Fig.4

Fig. 6

Fig.7

Fig. 8